# EUROPEAN PATENT APPLICATION

(11) **EP 3 673 755 A1**
(43) Date of publication of application: **01.07.2020**
(21) Application number: 19771171.6
(22) Date of filing: 06.05.2019
(51) Int. Cl.: A24F 47/00, A24D 1/00, A24B 15/16, A24C 5/00, A24D 3/02, A24D 3/04, A24D 3/06

(54) **INTEGRALLY FORMED HEAT-NOT-BURN SMOKING PRODUCT AND PREPARATION METHOD THEREFOR**

(30) Priority: 16.08.2018 CN 201810932429; 28.08.2018 CN 201810985768; 28.08.2018 CN 201810994672; 31.10.2018 CN 201811285168; 31.10.2018 CN 201811285170
(71) Applicant: Yunnan Xike Science & Technology Co., Ltd., Kunming, Yunnan 650000 (CN)
(72) Inventor: CAO, Yinghui, Kunming, Yunnan 650000 (CN); WANG, Tao, Kunming, Yunnan 650000 (CN); WANG, Songfeng, (CN); ZHANG, Yong, (CN); CAO, Yunsong, Kunming, Yunnan 650118 (CN)
(74) Representative: Biallo, Dario
(86) International application number: PCT/CN2019/085647
(87) International publication number: WO 2019/179532

(57) **Abstract**

An integrally-formed heat-not-burn smoking article and a manufacturing method therefor, wherein the smoking article comprises a lip-proximal end and a lip-distal end, and the smoking article is formed by integrally filling a piece of forming paper having a constant thickness, from the lip-distal end to the lip-proximal end, with four or more different unit sections comprising a filter unit, a gel cooling aroma-carrying unit, a hollow special particle unit, a hollow supporting unit, a cavity unit, a blocking sheet unit and a smoking unit. The manufacturing method involves corresponding integral filling, with the manner of the filling comprising positioned filling in with independent units and integral filling in with combined units. The present invention can reduce the temperature of smoke, reduce a burning, hot and spicy feeling caused by the smoke entering the oral cavity, improve the feeling of a smoking experience.

## Description

### Technical Field

The present invention relates to the technical field of heat-not-burn smoking articles, and in particular to an integrally-formed heat-not-burn smoking article and a manufacturing method therefor.

### Background Art

Heat-not-burn smoking articles provide consumers with smoke and aroma substances by heating rather than burning a smoking material. Due to the omission of a high temperature combustion and cracking process, the harmful ingredients in smoke are greatly reduced. Among them, the most representative one is heat-not-burn cigarettes. A currently common heat-not-burn smoking article is composed of four parts, namely, respectively from the lip-distal end to the lip-proximal end, a smoking section, a hollow section, a cooling section and a filter section. Current processing and manufacturing methods mostly involve manufacturing a smoking section using a modified cigarette making machine, respectively manufacturing respective filter tip sections using a filter rod forming machine, and finally, designing and combining them by means of a filter rod combination machine to manufacture a heat-not-burn smoking articleaccording to a quaternary combination form. The methods have higher requirements on the filter rod combination machine, require modification of a cigarette making machine, have combination complexity and also involve a tedious manufacturing process.

However, in the prior art, since the structure of the filter rod combination machine is mostly fixed by the manufacturer, the process of cigarette making machine modification is complicated, and the manufacturing process is also tedious.

### Summary of the Invention

The technical problem to be solved by the present invention is to provide an integrally-formed heat-not-burn smoking article and a manufacturing method therefor in order to solve the problems of traditional processing and manufacturing methods having higher requirements on a filter rod combination machine, requiring modification of a cigarette making machine, having combination complexity and also involving a complicated manufacturing process.

The technical solution used is as follows:
One aspect of the present invention provides an integrally-formed heat-not-burn smoking article, wherein the smoking article comprises a lip-proximal end and a lip-distal end, and the smoking article is formed by integrally filling a piece of forming paper having a fixed thickness, from the lip-distal end to the lip-proximal end, with four or more different unit sections comprising a filter unit, a gel cooling aroma-carrying unit, a hollow special particle unit, a hollow supporting unit, a cavity unit, a blocking sheet unit and a smoking unit.

Furthermore, the gel cooling aroma-carrying unit has a polylactic acid complex cylinder as an internal material, the polylactic acid complex cylinder is made of one or more of polylactic acid, polyethylene glycol, β-cyclodextrin, chitosan, hydroxypropyl methylcellulose, cetyl alcohol, paraffin, arabic gum, aluminum hydroxide, magnesium hydroxide and nano-silica materials, and the mass fraction of the internal material of the gel cooling aroma-carrying unit relative to all the unit sections is 1-40%.

Furthermore, the hollow special particle unit is composed of special customized particles, wherein the special customized particles comprise natural plant particles, activated carbon particles and synthetic particles, and the smoke passes through the special customized particles to complete aroma substance elution and harmful ingredient adsorption.

Furthermore, the filter unit is a mouth rod, and the mouth rod is formed by sequentially externally wrapping a hollow section, a cooling section and a filter section with the forming paper, wherein the hollow section is positioned proximal to the smoking section; the cooling section is connected to the hollow section for flow guide; and the filter section is connected to the cooling section.

Furthermore, the hollow section is a circular or polygonal shape made of corrugated paper, polylactic acid fibers and a polyethylene material and is used for supporting the passage of a gas flow.

Furthermore, the filter section is made by rolling polylactic acid silk fibroin or a paper material by means of a filter rod machine.

Furthermore, the cooling section comprises a cooling inner core and a casing connected to the outer side of the cooling inner core in a sleeve joint manner, wherein the material of the casing is paper, ceramic or an aluminum alloy; the cooling inner core is a cylinder; the material of the cooling inner core is made of polylactic acid and a compound comprising one or more of polyethylene glycol, aluminum hydroxide, magnesium hydroxide and nano-silica; and the mass fraction of the compound relative to the cooling inner core is 1-20%.

Furthermore, the cooling inner core is a cylinder manufactured by means of molding or a 3D printing technology, wherein the internal structure of the cylinder is one of or a combination of some of a honeycomb shape, a spiral shape and a mesh wave shape for extending the path of the gas flow, absorbing heat and reducing the temperature of the smoke.

Furthermore, the outer side of the cooling inner core is supported with a heat absorbing material comprising one or both of sodium sulfate decahydrate and sodium tetraborate decahydrate; and the mass fraction of the heat absorbing material relative to the cooling inner core is 1-10%.

Furthermore, the manufacturing of the cooling section comprises the following steps:
S1. uniformly mixing the polylactic acid material and the compound in a high mixer, and then adding the mixture to a twin-screw extruder for blending, extrusion, ribboning, cooling and pelletizing to obtain polylactic acid complex particles;
S2. molding the polylactic acid complex particles obtained in S1 by means of a molding device to obtain a polylactic acid complex cylinder; and
S3. immersing the polylactic acid complex cylinder obtained in S2 in an aqueous solution of the heat absorbing material, and drying the polylactic acid complex cylinder to obtain a cooling inner core, wherein the mass fraction of the heat absorbing material as a solute is 10-30%.

Furthermore, the smoking unit is made of a particle material comprising a heat-not-burn particle material carrier, a smoke-generating agent, a surface wrapping agent and an aroma-generating extract, wherein the heat-not-burn particle material carrier comprises Juncus effusus, gramineous plant particles, kudzu root, *Eupatorium adenophorum,* tobacco leaf powder, tobacco stem powder, hydroxypropyl methylcellulose, β-cyclodextrin, gelatin, sodium alginate, diatom ooze, chitosan, methylcellulose, lignin natural plant particles, activated carbon particles, synthetic particles, graphene, carbon fiber tubes, reconstituted tobacco leaf shreds and expanded tobacco stem particles, the formulated ratio of the smoke-generating agent to the aroma-generating extract is 5-30%, the smoke-generating agent comprises one or more of glycerol, propylene glycol and glycerol diacetate, the aroma-generating extract and aroma-generating components comprise a cocoa extract, a blueberry extract, a blackcurrant extract, a red date extract, a chicory extract, menthol, an amide cool taste agent, a tobacco extract, a tobacco absolute oil, nicotine, a nicotine salt and a refined tobacco substance, and the surface wrapping agent comprises kudzu root, *Eupatorium adenophorum,* gelatin, sodium alginate, chitosan, methylcellulose, diatom ooze, lignin, tobacco leaf powder, tobacco stem powder, hydroxypropyl methylcellulose, β-cyclodextrin, activated carbon powder, graphene and carbon fiber tubes.

Furthermore, the heat-not-burn particle material carrier is subjected to a biological activity treatment, and the method for the biological activity treatment comprises one or more of a protease treatment, a cellulase treatment, a hemicellulase treatment, a pectinase treatment, and an amylase treatment.

Furthermore, the particle size of particles in the heat-not-burn particle material carrier ranges from 20 to 200 mesh, and the length of filaments in the heat-not-burn particle material carrier is 4 to 15 mm; and the temperature for drying the particles of the heat-not-burn particle material carrier is 50-150°C, the time for drying the heat-not-burn particle material carrier is 12-120 min, and the accepted moisture index detection range of the particles is 8-13%.

Furthermore, the particle size of the surface wrapping agent ranges from 50 to 300 mesh, and the surface wrapping agent is added in an amount of 1-30% by weight based on the total weight of the smoking particles.

Furthermore, the preparation of the particle material comprises the following steps:
S1: firstly selecting domestic high-quality particles or natural, mineral or synthetic particles and powder thereof as the heat-not-burn particle material carrier, granulating or compounding the particle material carrier, subjecting the particle material carrier to a biological activity treatment, and then uniformly mixing the resultant with the aroma-generating extract and the smoke-generating agent;
S2: after full absorption in a ventilated and sterile environment, sending the mixture into a specially-made oven for 0.2-2 h of drying, and after moisture detection is passed, adding a prepared aroma component to the particles in a cigarette flavoring manner; and
S3: finally adding the surface wrapping agent, uniformly stirring same to obtain a finished product, and mixing the finished product with cigarette a material of tobacco leaf shreds, reconstituted tobacco leaf shreds and expanded tobacco stem particles to form a new cigarette smoking particle material.

Furthermore, the smoking unit is a smoking unit formed by sealing the lip-distal end or both ends, with the method for the sealing comprising the following steps:
S1: selecting a sealing material, wherein a suitable sealing material is selected according to the shape of a heating module of a heat-not-burn smoking set; and
S2: sealing, wherein the lip-distal end or both ends are sealed by using the sealing material to form the smoking unit, and the seal is treated by using a sizing or rolling technique.

Furthermore, the sealing material comprises one or more of a high temperature-resistant, high gas permeability paper, an aluminum sheet, a plastic film, a ceramic sheet, quartz sand, aluminum oxide, magnesium oxide, silica gel, a white latex, a polyoxyethylene paste resin, a metal sheet, a tin foil and a chemical fiber product.

Furthermore, glues used in the sizing technique in S2 include a hot melt adhesive, an aqueous adhesive or a starch adhesive; and the sealing process may be one or more of a sizing calendering type, an external wrapping type, and an imbedding type.

Furthermore, the shape of the surface of a seal of the imbedding type is a dotted shape, a cross shape, a Union Jack shape, a linear shape, a pentagram shape, an octagonal shape, a diamond shape, a hexagonal shape or a triangular shape; and the shape of the surface of the external wrapping type and the sizing calendering type is a hole shape caused by laser perforation, electrostatic perforation or mechanical perforation.

Another aspect of the present invention provides a method for manufacturing the integrally-formed heat-not-burn smoking article of the above solution, the method comprising the steps of:
integrally filling a piece of forming paper having a fixed thickness, from the lip-distal end to the lip-proximal end, with more than four different unit sections, wherein the manner of the filling comprises positioned filling in with independent units and integral filling in with combined units, and after these unit sections are respectively formed, manufacturing a complete heat-not-burn smoking article by means of an equipment positioning.

The beneficial effects of the present invention are as follows:
since the integrally-formed heat-not-burn smoking article does not require combination manufacture using a filter rod combination machine and does not require modification of a cigarette making device, the manufacturing process is simplified, turnover links are reduced, current tobacco monopoly restrictions are evaded, the formation is simple, and more combinations and choices of functional units are provided while the manufacturing cost is reduced, as compared to former manufacturing methods.

### Brief Description of the Drawings

Figure 1 is a structural schematic view of the distribution of each unit of an integrally-formed heat-not-burn smoking article.
Figure 2 is a structural schematic view of a mouth rod.
Figure 3 is a three-dimensional structural schematic view of a cooling section of a mouth rod.
Figure 4 is a structural schematic top view of a cooling section of a mouth rod.
Figure 5 is a flow chart of preparing a particle material.

### Detailed Description of Embodiments

Specific embodiments of the present invention will be further described below in conjunction with the drawings. It should be noted here that the description of the embodiments is intended to help understand the present invention, but does not constitute a limitation to the present invention. In addition, the technical features involved in the embodiments of the present invention as described below can be combined with each other so long as they do not constitute a conflict with each other.

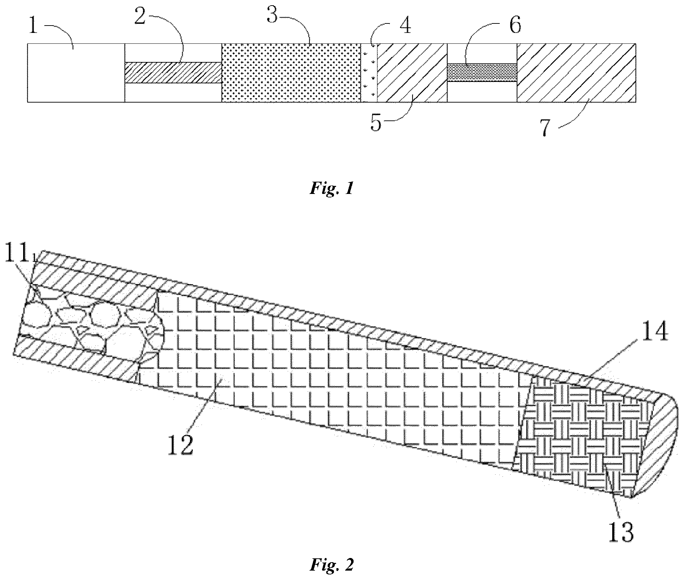

In one aspect, Figure 1 shows an integrally-formed heat-not-burn smoking article, wherein the smoking article comprises a lip-proximal end and a lip-distal end, and the smoking article is formed by integrally filling a piece of forming paper having a fixed thickness, from the lip-distal end to the lip-proximal end, with four or more different unit sections comprising a filter unit 1, a gel cooling aroma-carrying unit 2, a hollow special particle unit 3, a blocking sheet unit 4, a cavity unit 5, a hollow supporting unit 6, and a smoking unit 7.

With regard to the gel cooling aroma-carrying unit 2:
The gel cooling aroma-carrying unit has a polylactic acid complex cylinder as an internal material, the polylactic acid complex cylinder is made of one or more of polylactic acid, polyethylene glycol, β-cyclodextrin, chitosan, hydroxypropyl methylcellulose, cetyl alcohol, paraffin, arabic gum, aluminum hydroxide, magnesium hydroxide and nano-silica materials, and the mass fraction of the internal material of the gel cooling aroma-carrying unit relative to all the unit sections is 1-40%.

In an embodiment, the gel cooling aroma-carrying unit is obtained by uniformly mixing a polylactic acid having a mass fraction of 80% and polyethylene glycol having a mass fraction of 20% in a high mixer for compounding, and then adding the mixture to a twin-screw extruder for blending, extrusion, ribboning, cooling and pelletizing to obtain polylactic acid complex particles; then manufacturing the obtained polylactic acid complex particles into a cylinder having a circumference of 15-23 mm and a length of 5-30 mm, the interior of which is a honeycomb shape, by means of by molding; and finally immersing the polylactic acid complex cylinder in an aqueous solution of sodium sulfate decahydrate having a mass fraction of 20% for 1 h and drying the polylactic acid complex cylinder. The honeycomb-like cylinder can extend the path of a gas flow, absorb heat and reduce the temperature of smoke.

With regard to the hollow special particle unit 3:
The hollow special particle unit is composed of special customized particles, wherein the special customized particles comprise natural plant particles, activated carbon particles and synthetic particles, and the smoke passes through the special customized particles to complete aroma substance elution and harmful ingredient adsorption.

With regard to the blocking sheet unit 4:
A blocking sheet in the blocking sheet unit is formed by pressing a polyester material capable of withstanding a high temperature of 400°C by means of compliance with a mold, and the blocking sheet has a vent hole, the diameter of which is smaller than the particle size of the special customized particles. The blocking sheet unit functions to directionally disperse and guide a flow. Smoke passing through the blocking sheet unit enters the hollow special particle unit to complete aroma substance elution and harmful ingredient adsorption.

With regard to the cavity unit 5:
The cavity unit functions to guide the flow of smoke.

With regard to the hollow supporting unit 6:
The hollow supporting unit is used for bringing into communication and supporting the smoking unit and the cavity unit while guiding the flow of smoke from the smoking unit into the cavity unit having a cavity.

With regard to the filter unit 1:
The filter unit 1 is a mouth rod 1. As shown in Figure 2, the mouth rod 1 is formed by sequentially externally wrapping a hollow section 11, a cooling section 12 and a filter section 13 with a piece of forming paper 14, wherein the hollow section is positioned proximal to the smoking section, i.e., close to the smoking unit end; the cooling section is connected to the hollow section for flow guide; and the filter section is connected to the cooling section.

In a specific embodiment, the hollow section 11 is a circular or polygonal shape made of corrugated paper, polylactic acid fibers and a polyethylene material and is used for supporting the passage of a gas flow.

The filter section 13 may be made of one of polylactic acid silk fibroin, paper materials, or other fibrous materials having filtration properties, but is not limited thereto, and may be made by means of rolling using a filter rod machine.

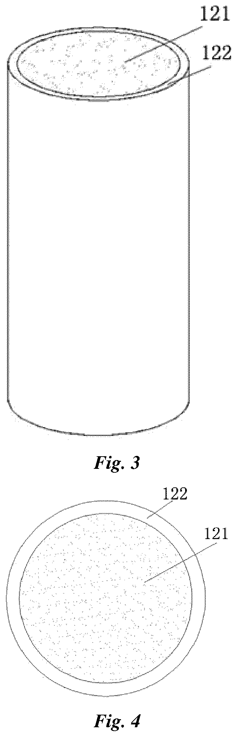

Referring to Figure 3 and Figure 4, the cooling section 12 comprises a cooling inner core 121 and a casing 122 connected to the outer side of the cooling inner core in a sleeve joint manner, wherein the material of the casing 122 is paper, ceramic or an aluminum alloy; the cooling inner core is a cylinder; the material of the cooling inner core 121 is made of polylactic acid and a compound comprising one or more of polyethylene glycol, aluminum hydroxide, magnesium hydroxide and nano-silica; and the mass fraction of the compound relative to the cooling inner core is 1-20%.

The cooling inner core 121 is a cylinder manufactured by means of molding or a 3D printing technology, wherein the internal structure of the cylinder is one of or a combination of some of a honeycomb shape, a spiral shape and a mesh wave shape for extending the path of the gas flow, absorbing heat and reducing the temperature of the smoke.

The outer side of the cooling inner core 121 is supported with a heat absorbing material comprising one or both of sodium sulfate decahydrate and sodium tetraborate decahydrate; and the mass fraction of the heat absorbing material relative to the cooling inner core is 1-10%.

The manufacturing of the cooling section 12 comprises the following steps:
S1. uniformly mixing the polylactic acid material and the compound in a high mixer, and then adding the mixture to a twin-screw extruder for blending, extrusion, ribboning, cooling and pelletizing to obtain polylactic acid complex particles;
S2. molding the polylactic acid complex particles obtained in S1 by means of a molding device to obtain a polylactic acid complex cylinder; and
S3. immersing the polylactic acid complex cylinder obtained in S2 in an aqueous solution of the heat absorbing material, and drying the polylactic acid complex cylinder to obtain a cooling inner core, wherein the mass fraction of the heat absorbing material as a solute is 10-30%.

The hollow section 11, the cooling section 12 and the filter section 13 can be separately formed, and finally combined by means of a filter rod combination machine to manufacture a mouth rod according to a ternary combination structure. The hollow section, the cooling section and the filter section are integrated and molded off-line separately, and the cooling section can effectively reduce the temperature of the smoke while ensuring the delivery of a certain amount of smoke during smoking.

The materials used for the cooling inner core of the cooling section are both efficient heat absorbing and cooling materials, the honeycomb, spiral and mesh wave cylinders can effectively extend the path of the gas flow, thereby further improving the cooling effect, the cooling unit can significantly reduce the temperature of the smoke, reduce a burning, hot and spicy feeling caused by the smoke entering the oral cavity, and improve the feeling of a smoking experience, the casing can improve the aesthetic quality of the cooling inner core, and where the casing is made of ceramic or an aluminum alloy, the casing has a good thermal conductivity, which further facilitate the dissipation of heat from the cooling inner core to the air.

With regard to the smoking unit 7:
The smoking unit 7 is made of a particle material comprising a heat-not-burn particle material carrier, a smoke-generating agent, a surface wrapping agent and an aroma-generating extract, wherein the heat-not-burn particle material carrier comprises Juncus effusus, gramineous plant particles, kudzu root, *Eupatorium adenophorum,* tobacco leaf powder, tobacco stem powder, hydroxypropyl methylcellulose, β-cyclodextrin, gelatin, sodium alginate, diatom ooze, chitosan, methylcellulose, lignin natural plant particles, activated carbon particles, synthetic particles, graphene, carbon fiber tubes, reconstituted tobacco leaf shreds and expanded tobacco stem particles, the formulated ratio of the smoke-generating agent to the aroma-generating extract is 5-30%, the smoke-generating agent comprises one or more of glycerol, propylene glycol and glycerol diacetate, the aroma-generating extract and aroma-generating components comprise a cocoa extract, a blueberry extract, a blackcurrant extract, a red date extract, a chicory extract, menthol, an amide cool taste agent, a tobacco extract, a tobacco absolute oil, nicotine, a nicotine salt and a refined tobacco substance, and the surface wrapping agent comprises kudzu root, *Eupatorium adenophorum,* gelatin, sodium alginate, chitosan, methylcellulose, diatom ooze, lignin, tobacco leaf powder, tobacco stem powder, hydroxypropyl methylcellulose, β-cyclodextrin, activated carbon powder, graphene and carbon fiber tubes.

In a preferred embodiment, the heat-not-burn particle material carrier is subjected to a biological activity treatment, and the method for the biological activity treatment comprises one or more of a protease treatment, a cellulase treatment, a hemicellulase treatment, a pectinase treatment, and an amylase treatment.

In a preferred embodiment, the particle size of particles in the heat-not-burn particle material carrier ranges from 20 to 200 mesh, and the length of filaments in the heat-not-burn particle material carrier is 4 to 15 mm; and the temperature for drying the particles of the heat-not-burn particle material carrier is 50-150°C, the time for drying the heat-not-burn particle material carrier is 12-120 min, and the accepted moisture index detection range of the particles is 8-13%.

The particle size of the surface wrapping agent ranges from 50 to 300 mesh, and the surface wrapping agent is added in an amount of 1-30% by weight based on the total weight of the smoking particles.

After the particles of the heat-not-burn particle material carrier are dried, the dried material can be flavored once or twice in a cigarette flavoring manner, wherein methods for the drying include but are not limited to hot air, microwave, infrared ray, etc.

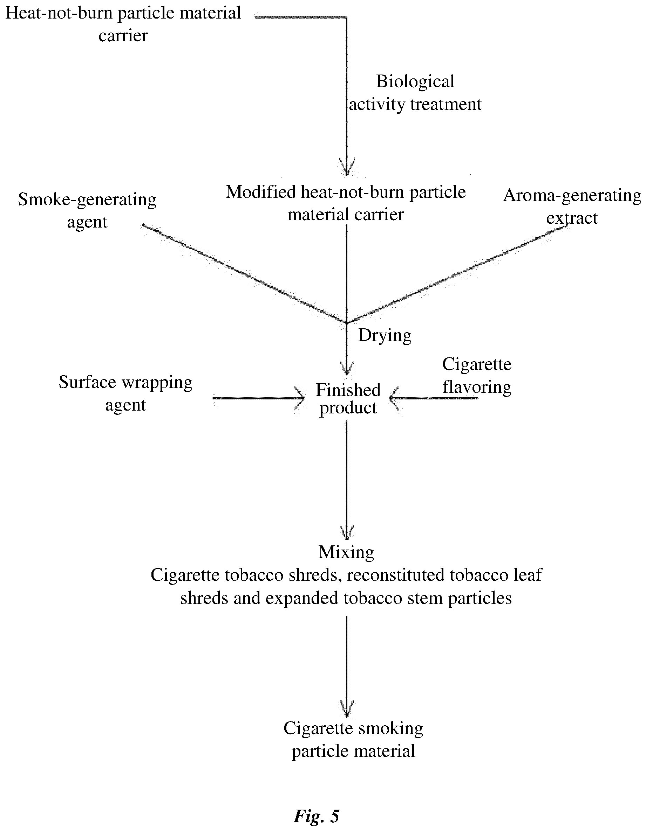

Referring to Figure 5, the preparation of the particle material comprises the following steps:
S1: firstly selecting natural, mineral or synthetic particles and powder thereof as the heat-not-burn particle material carrier, granulating or compounding the particle material carrier, subjecting the particle material carrier to a biological activity treatment, and then uniformly mixing the resultant with the aroma-generating extract and the smoke-generating agent;
S2: after full absorption in a ventilated and sterile environment, sending the mixture into a oven for 0.2-2 h of drying, and after moisture detection is passed, adding a prepared aroma component to the particles in a cigarette flavoring manner; and
S3: finally adding the surface wrapping agent, uniformly stirring same to obtain a finished product, and mixing the finished product with cigarette a material of tobacco leaf shreds, reconstituted tobacco leaf shreds and expanded tobacco stem particles to form a new cigarette smoking particle material.

In a preferred embodiment, the smoking unit is a smoking unit formed by sealing the lip-distal end or both ends, with the method for the sealing comprising the following steps:
S1: selecting a sealing material, wherein a suitable sealing material is selected according to the shape of a heating module of a heat-not-burn smoking set; and
S2: sealing, wherein the lip-distal end or both ends are sealed by using the sealing material to form the smoking unit, and the seal is treated by using a sizing or rolling technique.

Glues used in the sizing technique include a hot melt adhesive, an aqueous adhesive or a starch adhesive; and
the sealing process may be one or more of a sizing calendering type, an external wrapping type, and an imbedding type. In these types, the shape of the surface of a seal of the imbedding type may include, but is not limited to, a dotted shape, a cross shape, a Union Jack shape, a linear shape, a pentagram shape, an octagonal shape, a diamond shape, a hexagonal shape or a triangular shape, etc. The shape of the surface of the external wrapping type and the sizing calendering type may include, without limitation, a hole shape caused by laser perforation, electrostatic perforation or mechanical perforation, etc.

The sealing material comprises, but is not limited to, one or more of a high temperature-resistant, high gas permeability paper, an aluminum sheet, a plastic film, a ceramic sheet, quartz sand, aluminum oxide, magnesium oxide, silica gel, a white latex, a polyoxyethylene paste resin, a metal sheet, a tin foil and a chemical fiber product.

In a specific embodiment, as the sealing material, special paper is used, including colored paper, high temperature-resistant paper, and high gas permeability paper, and the paper has a gas permeability of 4000-8000 CU.

In another specific embodiment, for the sealing material, special laser, electrostatically or mechanically perforated paper and mechanically perforated aluminum foil are used as raw materials, and the special paper has a gas permeability of 4000-8000 CU.

In a third specific embodiment, for the sealing material, silica gel and a ceramic hard material is used as raw materials, and the above-mentioned materials are perforated by using a perforation technique, wherein perforated shapes are a circular hole, a line hole, a linear shape, a cross shape, an X shape, etc.

The seal can prevent the packed material in the smoking unit from leaking out, is convenient for cleaning, can increase the ventilation efficiency of the smoking unit, and enhance the smoking effect. The problem of the smoking material easily leaking, being polluted, deteriorating and being single is well solved.

In one aspect, there is provided a method for manufacturing an integrally-formed heat-not-burn smoking article, comprising the steps of:
integrally filling a piece of forming paper having a fixed thickness, from the lip-distal end to the lip-proximal end, with more than four different unit sections, wherein the manner of the filling comprises positioned filling in with independent units and integral filling in with combined units, and after these unit sections are respectively formed, manufacturing a complete heat-not-burn smoking article by means of an equipment positioning.

Since the integrally-formed heat-not-burn smoking article does not require combination manufacture using a filter rod combination machine and does not require modification of a cigarette making device, the manufacturing process is simplified, turnover links are reduced, current tobacco monopoly restrictions are evaded, the formation is simple, and more combinations and choices of functional units are provided while the manufacturing cost is reduced, as compared to former manufacturing methods.

In a specific embodiment, a paper tube forming device is used to manufacture an empty tube that meets requirements, with the empty tube material being a double-layer composite material, wherein the outer material is conventional vegetable fiber paper and the inner material is aluminum foil paper, and the individual unit sections are combined and integrally filled into the empty tube to complete manufacture of an entire section.

The integrally-formed heat-not-burn smoking article is used as a cigarette cartridge, and when smoking, smoke generated by the smoking unit 7 sequentially passes through the hollow supporting unit 6, the cavity unit 5, the blocking sheet unit 4, the hollow special particle unit 3, the gel cooling aroma-carrying unit 2 and the filter unit 1.

The forming paper as a tubular material has a certain thickness enabling absorption and storage of a large amount of heat, and dissipate heat in a radiation and convection manner before entrance into the month, with sufficient cooling having been achieved before reaching the oral cavity. The hollow supporting unit 6, the cavity unit 5, the blocking sheet unit 4, the hollow special particle unit 3, the gel cooling aroma-carrying unit 2, the filter unit 1, etc. all have a cooling effect, and allow gradual and full cooling during the conduction of the smoke, thereby reducing the temperature of the smoke, reducing a burning, hot and spicy feeling caused by the smoke entering the oral cavity and improving the feeling of a smoking experience.

The embodiments of the present invention are described in detail above in conjunction with the accompanying drawings, but the present invention is not limited to the described embodiments. For a person skilled in the art, various changes, modifications, substitutions and variations made to the embodiments without departing from the principles and spirit of the present invention still fall within the scope of protection of the present invention.

## Claims

1. An integrally-formed heat-not-burn smoking article, wherein the smoking article comprises a lip-proximal end and a lip-distal end, and the smoking article is formed by integrally filling a piece of forming paper having a constant thickness, from the lip-distal end to the lip-proximal end, with four or more different unit sections comprising a filter unit, a gel cooling aroma-carrying unit, a hollow special particle unit, a hollow supporting unit, a cavity unit, a blocking sheet unit and a smoking unit.

2. The integrally-formed heat-not-burn smoking article according to claim 1, wherein the gel cooling aroma-carrying unit has a polylactic acid complex cylinder as an internal material, the polylactic acid complex cylinder is made of one or more of polylactic acid, polyethylene glycol, β-cyclodextrin, chitosan, hydroxypropyl methylcellulose, cetyl alcohol, paraffin, arabic gum, aluminum hydroxide, magnesium hydroxide and nano-silica materials, and the mass fraction of the internal material of the gel cooling aroma-carrying unit relative to all the unit sections is 1-40%.

3. The integrally-formed heat-not-burn smoking article according to claim 1, wherein the hollow special particle unit is composed of special customized particles, wherein the special customized particles comprise natural plant particles, activated carbon particles and synthetic particles, and the smoke passes through the special customized particles to complete aroma substance elution and harmful ingredient adsorption.

4. The integrally-formed heat-not-burn smoking article according to claim 1, wherein the filter unit is a mouth rod, and the mouth rod is formed by sequentially externally wrapping a hollow section, a cooling section and a filter section with the forming paper, wherein the hollow section is positioned proximal to the smoking section; the cooling section is connected to the hollow section for flow guide; and the filter section is connected to the cooling section.

5. The integrally-formed heat-not-burn smoking article according to claim 4, wherein the hollow section is a circular or polygonal shape made of corrugated paper, polylactic acid fibers and a polyethylene material and is used for supporting the passage of a gas flow.

6. The integrally-formed heat-not-burn smoking article according to claim 4, wherein the filter section is made by rolling polylactic acid silk fibroin or a paper material by means of a filter rod machine.

7. The integrally-formed heat-not-burn smoking article according to claim 4, wherein the cooling section comprises a cooling inner core and a casing connected to the outer side of the cooling inner core in a sleeve joint manner, wherein the material of the casing is paper, ceramic or an aluminum alloy; the cooling inner core is a cylinder; the material of the cooling inner core is made of polylactic acid and a compound comprising one or more of polyethylene glycol, aluminum hydroxide, magnesium hydroxide and nano-silica; and the mass fraction of the compound relative to the cooling inner core is 1-20%.

8. The integrally-formed heat-not-burn smoking article according to claim 7, wherein the cooling inner core is a cylinder manufactured by means of molding or a 3D printing technology, wherein the internal structure of the cylinder is one of or a combination of some of a honeycomb shape, a spiral shape and a mesh wave shape for extending the path of the gas flow, absorbing heat and reducing the temperature of the smoke.

9. The integrally-formed heat-not-burn smoking article according to claim 7, wherein the outer side of the cooling inner core is supported with a heat absorbing material comprising one or both of sodium sulfate decahydrate and sodium tetraborate decahydrate; and the mass fraction of the heat absorbing material relative to the cooling inner core is 1-10%.

10. The integrally-formed heat-not-burn smoking article according to claim 7, wherein the manufacturing of the cooling section comprises the following steps:
s1. uniformly mixing the polylactic acid material and the compound in a high mixer, and then adding the mixture to a twin-screw extruder for blending, extrusion, ribboning, cooling and pelletizing to obtain polylactic acid complex particles;
s2. molding the polylactic acid complex particles obtained in s1 by means of a molding device to obtain a polylactic acid complex cylinder; and
s3. immersing the polylactic acid complex cylinder obtained in s2 in an aqueous solution of the heat absorbing material, and drying the polylactic acid complex cylinder to obtain a cooling inner core, wherein the mass fraction of the heat absorbing material as a solute is 10-30%.

11. The integrally-formed heat-not-burn smoking article according to claim 1, wherein the smoking unit is made of a particle material comprising a heat-not-burn particle material carrier, a smoke-generating agent, a surface wrapping agent and an aroma-generating extract, wherein the heat-not-burn particle material carrier comprises Juncus effusus, gramineous plant particles, kudzu root, eupatorium adenophorum, tobacco leaf powder, tobacco stem powder, hydroxypropyl methylcellulose, β-cyclodextrin, gelatin, sodium alginate, diatom ooze, chitosan, methylcellulose, lignin natural plant particles, activated carbon particles, synthetic particles, graphene, carbon fiber tubes, reconstituted tobacco leaf shreds and expanded tobacco stem particles, the formulated ratio of the smoke-generating agent to the aroma-generating extract is 5-30%, the smoke-generating agent comprises one or more of glycerol, propylene glycol and glycerol diacetate, the aroma-generating extract and aroma-generating components comprise a cocoa extract, a blueberry extract, a blackcurrant extract, a red date extract, a chicory extract, menthol, an amide cool taste agent, a tobacco extract, a tobacco absolute oil, nicotine, a nicotine salt and a refined tobacco substance, and the surface wrapping agent comprises kudzu root, *eupatorium adenophorum,* gelatin, sodium alginate, chitosan, methylcellulose, diatom ooze, lignin, tobacco leaf powder, tobacco stem powder, hydroxypropyl methylcellulose, β-cyclodextrin, activated carbon powder, graphene and carbon fiber tubes.

12. The integrally-formed heat-not-burn smoking article according to claim 11, wherein the heat-not-burn particle material carrier is subjected to a biological activity treatment, and the method for the biological activity treatment comprises one or more of a protease treatment, a cellulase treatment, a hemicellulase treatment, a pectinase treatment, and an amylase treatment.

13. The integrally-formed heat-not-burn smoking article according to claim 11, wherein the particle size of particles in the heat-not-burn particle material carrier ranges from 20 to 200 mesh, and the length of filaments in the heat-not-burn particle material carrier is 4 to 15 mm; and the temperature for drying the particles of the heat-not-burn particle material carrier is 50-150°C, the time for drying the heat-not-burn particle material carrier is 12-120 min, and the accepted moisture index detection range of the particles is 8-13%.

14. The integrally-formed heat-not-burn smoking article according to claim 11, wherein the particle size of the surface wrapping agent ranges from 50 to 300 mesh, and the surface wrapping agent is added in an amount of 1-30% by weight based on the total weight of the smoking particles.

15. The integrally-formed heat-not-burn smoking article according to claim 11, wherein the preparation of the particle material comprises the following steps:
S1: firstly selecting domestic high-quality particles or natural, mineral or synthetic particles and powder thereof as the heat-not-burn particle material carrier, granulating or compounding the particle material carrier, subjecting the particle material carrier to a biological activity treatment, and then uniformly mixing the resultant with the aroma-generating extract and the smoke-generating agent;
S2: after full absorption in a ventilated and sterile environment, sending the mixture into a oven for 0.2-2 h of drying, and after moisture detection is passed, adding a prepared aroma component to the particles in a cigarette flavoring manner; and
S3: finally adding the surface wrapping agent, uniformly stirring same to obtain a finished product, and mixing the finished product with cigarette a material of tobacco leaf shreds, reconstituted tobacco leaf shreds and expanded tobacco stem particles to form a new cigarette smoking particle material.

16. The integrally-formed heat-not-burn smoking article according to claim 1, wherein the smoking unit is a smoking unit formed by sealing the lip-distal end or both ends, with the method for the sealing comprising the following steps:
s1: selecting a sealing material, wherein a suitable sealing material is selected according to the shape of a heating module of a heat-not-burn smoking set; and
s2: sealing, wherein the lip-distal end or both ends are sealed by using the sealing material to form the smoking unit, and the seal is treated by using a sizing or rolling technique.

17. The integrally-formed heat-not-burn smoking article according to claim 16, wherein the sealing material comprises one or more of a high temperature-resistant, high gas permeability paper, an aluminum sheet, a plastic film, a ceramic sheet, quartz sand, aluminum oxide, magnesium oxide, silica gel, a white latex, a polyoxyethylene paste resin, a metal sheet, a tin foil and a chemical fiber product.

18. The integrally-formed heat-not-burn smoking article according to claim 16, wherein glues used in the sizing technique in S2 include a hot melt adhesive, an aqueous adhesive or a starch adhesive; and the sealing process may be one or more of a sizing calendering type, an external wrapping type, and an imbedding type.

19. The integrally-formed heat-not-burn smoking article according to claim 18, wherein the shape of the surface of a seal of the imbedding type is a dotted shape, a cross shape, a Union Jack shape, a linear shape, a pentagram shape, an octagonal shape, a diamond shape, a hexagonal shape or a triangular shape; and the shape of the surface of the external wrapping type and the sizing calendering type is a hole shape caused by laser perforation, electrostatic perforation or mechanical perforation.

20. A method for manufacturing the integrally-formed heat-not-burn smoking article according to claim 1, wherein comprising the steps of:
integrally filling a piece of forming paper having a fixed thickness, from the lip-distal end to the lip-proximal end, with more than four different unit sections, wherein the manner of the filling comprises positioned filling in with independent units and integral filling in with combined units, and after these unit sections are respectively formed, manufacturing a complete heat-not-burn smoking article by means of an equipment positioning.
